# EUROPEAN PATENT SPECIFICATION

(11) **EP 3 521 026 B1**
(45) Date of publication and mention of the grant of the patent: **28.07.2021**
(21) Application number: 18154949.4
(22) Date of filing: 02.02.2018
(51) Int. Cl.: B33Y 10/00, B33Y 30/00, B33Y 50/00, B33Y 50/02, B29C 64/106, B29C 64/153, B29C 64/386, B29C 64/393, B29C 64/245, B29C 64/264, B29C 64/268

(54) **METHOD FOR DETERMINING POSITION DATA FOR AN APPARATUS FOR ADDITIVELY MANUFACTURING THREE-DIMENSIONAL OBJECTS**
VERFAHREN ZUR BESTIMMUNG VON POSITIONSDATEN FÜR EINE VORRICHTUNG ZUR GENERATIVEN FERTIGUNG DREIDIMENSIONALER OBJEKTE
PROCÉDÉ DE DÉTERMINATION DE DONNÉES DE POSITION POUR UN APPAREIL DE FABRICATION ADDITIVE D'OBJETS TRIDIMENSIONNELS

(43) Date of publication of application: 07.08.2019
(73) Proprietor: CL Schutzrechtsverwaltungs GmbH, 96215 Lichtenfels (DE)
(72) Inventor: Hofmann, Alexander, 96260 Weismain (DE); Röblitz, Carsten, 96465 Neustadt bei Coburg (DE)
(74) Representative: Hafner & Kohl PartmbB

(56) References cited:
- EP-A1- 1 048 441
- EP-A1- 3 159 080
- US-A1- 2014 065 194

## Description

The invention relates to a method for determining position data for an apparatus for additively manufacturing three-dimensional objects by means of successive layerwise selective consolidation of layers of a build material arranged in the build plane essentially extending in x- and y-direction, which build material can be consolidated by means of an energy source, wherein the build material is carried by a carrying element of a carrying unit, wherein the carrying element is essentially movable in z-direction, wherein the z-direction is essentially perpendicular to the x- and y-direction. Document EP 1 048 441 A1 discloses a method for determining position data, generating calibration data, and controlling a position of an irradiation pattern of an irradiation device of an apparatus for additively manufacturing three-dimensional objects. The build material is carried by a carrying element of a carrying unit and the carrying element is essentially movable in z-direction, wherein the z-direction is essentially perpendicular to the x- and y-direction. Position data relating to an x- and/or y-position of the carrying element are determined for at least one z-position via an optical and/or a mechanical determination in advance of an additive manufacturing process for calibrating the irradiation device.

Additive manufacturing apparatuses in which an energy source, such as an energy beam, e.g. an electron beam or a laser beam, is used to selectively layerwise irradiate and consolidate layers of build material are generally known from prior art. Typically, a movable carrying element is used to carry a volume of build material that can be selectively irradiated, e.g. a so-called "powder bed". The upper surface of the build material that is carried via the carrying element forms a so-called "build plane" in which build material can selectively and directly be irradiated via the energy source, such as the mentioned energy beams. To ensure that the respective energy beam is properly focused on the build plane, the z-position of the carrying element, i.e. the position of the carrying element along the z-direction, can usually be monitored.

It is an object of the present invention to provide an improved method for determining position data for an apparatus for additively manufacturing three-dimensional objects, in particular a method for determining position data, wherein the determination of the position of the build material, particularly the most upper layer which is to be selectively irradiated and consolidated, carried by a carrying element is improved.

The object is inventively achieved by a method according to claim 1, by a method according to claim 10 and by an apparatus according to claim 11.

Advantageous embodiments of the invention are subject to the dependent claims.

The method described herein is a method for determining position data for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

According to the inventive method one can determine position data of the carrying element that may be provided for an additive manufacturing process performed by an apparatus for additively manufacturing three-dimensional objects, as described before. The invention is based on the idea that position data relating to an x- and/or y-position of the carrying element are determined for at least one z-position. Thus, it is possible to perform a determination of the position of the carrying element in x- and/or y-position, i.e. additional to the determination of a z-position of the carrying element. This particularly allows for relating the x- and/or y-position of the carrying element with the corresponding z-position. In other words, the position of the carrying element in an x- and y-plane can be determined for a given z-position.

The x- and/or y-position of the carrying element may relate to a reference point on the carrying element, for example the center of the carrying element or any other arbitrary reference point, for example an edge or the position of a measurement structure assigned to the carrying element. A respective measurement structure is built as measurement pattern that can be (optically or tactilely) determined and is arranged on the bottom side of the carrying element. The carrying element may be built as build plate or dose plate, i.e. a circular or rectangular plate, preferably a metal plate, that is adapted to carry the build material. The carrying element may have a rectangular, particularly a square, base shape, for instance.

Thus, the position data can be determined via the inventive method, wherein the determined position data can be provided to an apparatus for additively manufacturing of three-dimensional objects, in which the respective carrying unit is used. Hence, the generated or determined position data can be used in an additive manufacturing process allowing for considering the at least one x- and/or y-position of the carrying element for the corresponding z-position. Advantageously, occurring deviations of the carrying element, e.g. from a nominal x- and/or y-position, can be taken into calculation and can be compensated accordingly, as will be described below.

The term "carrying element" in the scope of this application may in particular refer to any component of the apparatus contributing to the x- and/or y-deviation of the build plane and/or contributing to the carrying and/or positioning of the object being additively built and surrounded by non-consolidated build material, i.e. carrying and/or positioning the powder bed. Respective components may be a build plate, a spindle or shaft carrying/positioning the build plate or other components that allow for a conclusion on the z-position of the element carrying the powder bed, for instance.

The position data may be determined for at least two z-positions, in particular for a plurality of z-positions, preferably distributed along the movement range, in particular an entire movement range, of the carrying element in z-direction. According to this embodiment of the inventive method, the position of the carrying element in the x- and y-plane may be determined for at least two z-positions. In other words, the x-position and/or the y-position of the carrying element may not only be determined with the carrying element in one z-position, but the x- and/or y-position of the carrying element may be determined for at least two z-positions.

Again, by referencing or relating the x- and/or y-position of the carrying element to the corresponding z-position of the carrying element, the position data indicate the position of the carrying element in the x- and y-plane with the carrying element position in a specific z-position. Thus, possibly occurring deviations from a nominal x- and/or y-positions of the carrying element can be taken into calculation. Preferably, the position data may be determined for multiple z-positions that are distributed along a movement range of the carrying element. The movement range may therefore, contain multiple z-positions in which the carrying element can be positioned during a corresponding additive manufacturing process. The corresponding z-positions can, for example, relate to corresponding positions of the carrying element in which the carrying element is positioned during an additive manufacturing process to provide fresh build material or to receive build material, dependent on whether the carrying element is used in a dose unit or in a build unit. Preferably, it is possible to determine position data of the carrying element for each z-position.

Thus, it is possible to generate a direct relation between the x- and/or y-position of the carrying element and a corresponding z-position. The position data therefore, provide information on how the carrying element is positioned in a defined z-position, e.g. relative to a nominal position. Hence, the determined x- and/or y-position can be used to improve the positioning accuracy of the carrying element in an additive manufacturing process, as will be described below.

Further, calibration data may be generated relating to a deviation of the carrying element from a nominal position in x- and/or y-direction for at least one z-position. Thus, the position data that have been determined and relate to the x- and/or y-position of the carrying element, for example relative to a nominal position or at least one other component of the additive manufacturing apparatus or the build module or the dose module in which the carrying element is arranged, can be used to generate calibration data. The calibration data relate to whether the carrying element deviates from a nominal position in the x- and/or y-plane. Based on the position data, a deviation of the carrying element from a nominal position can be identified and calibration data can be generated that allow for a calibration of the carrying element or at least one other component of the apparatus, for example an irradiation device that is used to irradiate the build material carried by the carrying element.

Thus, an irradiation device, in particular the position of an irradiation pattern for the (generated by the irradiation device on the) corresponding layer of build material relative to the carrying element, may be controlled dependent on the calibration data and/or the position data. According to this embodiment of the inventive method, an irradiation device can be controlled dependent on the calibration data and/or dependent on the position data. As described before, the irradiation device is provided for selectively irradiating build material that is carried by the carrying element, i.e. a layer of build material arranged in the build plane. Thus, for each layer of build material that is selectively irradiated, the irradiation device generates an irradiation pattern that corresponds to the area of build material that has to be irradiated in the build plane to form the corresponding part of the three-dimensional object. The (relative) position of the irradiation pattern on the build plane depends on the x- and/or y-position of the carrying element for the corresponding z-position, since a deviation of an x- and/or y-position of the carrying element from a nominal x- and/or y-position leads to a deviation in the position of the irradiation pattern.

By controlling the irradiation device dependent on the calibration data and/or the position data, deviations in the x- and/or y-position can be compensated. As the x- and/or y-position can be determined for multiple z-positions, in particular all z-positions, the carrying element can be positioned, e.g. during the additive manufacturing process, the irradiation device can be controlled accordingly, in particular for every z-position in which the irradiation device is used to generate the corresponding irradiation pattern, which typically comprises a number of irradiation vectors, and selectively irradiates the build material arranged in the build plane.

According to another embodiment of the inventive method, the position data and/or the calibration data may be stored for the corresponding z-position, in particular for the corresponding carrying element. For example, in additive manufacturing apparatuses in which multiple powder modules, such as dose modules and build modules, may be used, it is advantageous to store the position data and/or the calibration data for the individual carrying elements. In particular, the position data and/or the calibration data may be stored for multiple z-positions, preferably all z-positions that are used in the additive manufacturing process or in which the carrying element may be positioned in the additive manufacturing process. The position data and/or the calibration data may be stored in a suitable data storage device, such as a database, hard-drive, for instance. A respective data storage device may be embodied as a network data storage device, i.e. installed in a local or global data network.

Thus, it is possible to use the corresponding position data and/or calibration data for the carrying element that is used to carry build material in the additive manufacturing process. Thus, the position data and/or the calibration data can be received from a corresponding data storage device dependent on which powder module is used, in particular which carrying element is used in the additive manufacturing process. This further allows for using the same powder module in different apparatuses, wherein the position data and/or the calibration data can be accessed by various apparatuses to allow for the corresponding position data and/or a calibration data to be used in the additive manufacturing process performed on the respective apparatus indicating the specific deviations that occur when the corresponding carrying element is positioned in the z-positions. Hence, the corresponding position data and/or calibration data may connect the carrying element and the z-positions to the deviations of the carrying element in the x-y-plane, e.g. from a nominal position.

The position data may be determined in advance to and/or during an additive manufacturing process. Thus, it is possible to have the position data determined in advance to an additive manufacturing process, wherein the position data may be determined for the carrying element used in the additive manufacturing process before the additive manufacturing process is performed. For example, for at least one z-position an x- and/or y-position of the carrying element can be determined and, for example, stored in a corresponding data storage device. It is also possible to determine the position data during an additive manufacturing process alternatively or additionally to the determination in advance. Thus, a "live monitoring" of the position of the carrying element is feasible. This embodiment particularly allows for directly determining the position data during the additive manufacturing process, wherein the deviations from a nominal position of the carrying element in the x- and/or y-direction can be determined for each z-position in which the carrying element is positioned in the additive manufacturing process. Advantageously, the deviations from a nominal position of the carrying element can directly be identified which further enhances the positioning accuracy of the corresponding irradiation pattern on the build material, since influences affecting the carrying element between a determination of the proposition data that has been performed in advance and the positioning of the carrying element in the actual additive manufacturing process can be reduced or even entirely avoided.

The x- and/or y-position of the carrying element is determined by an optical and/or a mechanical determination. The mechanical determination may provide a tactile sensing of the carrying element relative to a reference point. The optical determination may be performed in that a measurement pattern can be arranged, for example on a bottom side of the carrying element, wherein an optical determination element may be used to determine the position of the measurement pattern relative to a nominal position. A corresponding optical determination unit may therefore, comprise an optical determination element, comprising an optical sensor, such as a camera (CMOS, CCD, etc.). Hence, if the carrying element deviates in x- and/or y-direction in the corresponding z-position, the corresponding measurement pattern will also deviate from its nominal position. Thus, position data and/or a calibration data can be generated and used in the additive manufacturing process to compensate the deviation.

The position data may relate to a determined, in particular measured, x- and/or y-position and/or an absolute x- and/or y-position of the carrying element and/or a deviation thereof for at least one z-position. Thus, position data may relate to an x- and/or y-position of the carrying element that has been determined, in particular measured, or an absolute position or a deviation thereof. Hence, it is possible that the position data comprise information relating to the actual position of the carrying element or the position data indicate the deviation of the carrying element from a nominal position.

The position data may further relate to a distortion and/or an angular deviation of the carrying element, e.g. about the main axis of the carrying element, essentially arranged in z-direction. The carrying element may also be distorted or may angularly deviate from a nominal position, in particular about the main axis of the carrying element. According to this embodiment of the invention, the position data may also relate to a corresponding distortion and/or an angular deviation, which can for example be detected optically or mechanically.

According to another preferred embodiment of the inventive method, the following steps may be performed:
- a calibration object is manufactured extending over a defined part of the movement range, in particular the entire movement range, of the carrying element,
- at least one geometrical parameter of the calibration object is determined,
- the at least one determined geometrical parameter is compared with at least one corresponding nominal geometrical parameter,
- position data and/or calibration data are generated based on the comparison result.

In a first step, a calibration object may be manufactured that extends over a defined part of the movement range, in particular the entire movement range, of the carrying element, wherein preferably the calibration object extends at least over the part of the movement range that is used in an additive manufacturing process the position data are determined for. The calibration object may be a simple geometrical object, e.g. a cylinder, wherein the calibration object may arbitrarily extend or be positioned relative to the carrying element. Advantageously, the calibration object may be positioned and dimensioned approximately the same way as an object to be manufactured in the additive manufacturing process the position data and/or the calibration data are generated or will be positioned and/or dimensioned.

Further, at least one geometrical parameter of the calibration object may be determined. The geometrical parameter may relate to the three-dimensional geometry of the calibration object, in particular the outer surface or the shell surface of the calibration object. For example, a 3D-scanner may be used to scan the calibration object and determine the at least one geometrical parameter. It is particularly possible to determine how the calibration object extends in x- and/or y-direction, wherein preferably an edge of the calibration object can be measured to provide information about the x- and/or y-direction of the cross section of the calibration object.

Thus, in the next step, the at least one determined geometrical parameter may be compared with at least one corresponding nominal geometrical parameter. For example, the position of a cross section of the calibration object in a layer of the calibration object can be compared with a nominal position. Thus, it can be determined whether for the corresponding layer and connected therewith for the corresponding z-position, a deviation between the determined geometrical parameter and the nominal geometrical parameter occurs. Hence, position data and/or calibration data may be generated based on the comparison result.

In other words, the calibration object can be additively manufactured, wherein afterwards the calibration object can be measured to provide position data / calibration data. By measuring the geometry of a layer of the calibration object, a deviation in x- and/or y-direction can be identified and related with the corresponding z-direction in which the carrying element was positioned during the manufacturing process of the layer of the calibration object. Thus, position data and/or calibration data can be generated to compensate the deviations in the positioning of the carrying element for the corresponding z-position. The generated data can afterwards be used in an additive manufacturing process, wherein for each corresponding z-position the deviations that occurred in the manufacturing of the calibration object can be compensated, for example by a corresponding control of the irradiation device. Based on the position data and/or the calibration data, the irradiation device may be adapted to generate the corresponding irradiation pattern on the nominal position relative to the carrying element.

The geometrical parameter may be or may comprise a position of at least one part of the calibration object in x- and/or y-direction, in particular of a surface of the calibration object, for the corresponding z-position (in which the carrying element was positioned when the part was manufactured). Generally, any arbitrary geometrical parameter can be used that allows an identification of the deviation of the position of the carrying element in the x- and/or y-direction. The geometrical parameter may therefore, relate to any arbitrary reference point of the calibration object that may identify whether the carrying element was positioned in the nominal position in x- and/or y-direction or whether a deviation from the nominal position occurred during the manufacturing of the corresponding part (layer) of the calibration object.

The inventive method may be performed using at least one build module for an apparatus for additively manufacturing of three-dimensional objects, wherein, as described before, preferably for each build module that can be (or is intended to be) used with the corresponding apparatus position data and/or a calibration data can be generated. The corresponding position data and/or calibration data may be stored for multiple build modules, wherein the irradiation device of the apparatus a build module is used in, may be controlled dependent on the corresponding position data and/or calibration data. Thus, dependent on which build module is used in the additive manufacturing process that is performed on the additive manufacturing apparatus, the corresponding position data and/or calibration data that have been determined for the corresponding build module, can be used to control the irradiation device. Hence, it can be assured that the irradiation pattern that is generated via the irradiation device can be generated exactly in the nominal position for each layer of build material carried via the carrying element (for each z-position).

Besides, the invention relates to a method for operating at least one apparatus for additively manufacturing three-dimensional objects by means of successive layerwise selective consolidation of layers of a build material arranged in a build plane essentially extending in x- and y-direction, which build material can be consolidated by means of an energy source, i.e. particularly an energy beam, wherein the build material is carried by a carrying element of a carrying unit, wherein the carrying element is essentially movable in z-direction, wherein the z-direction is essentially perpendicular to the x- and y-direction, wherein position data relating to an x- and/or y- position of the carrying element are determined for at least one z-position.

Additionally, the invention relates to an apparatus for additively manufacturing three-dimensional objects by means of successive layerwise selective consolidation of layers of a build material arranged in a build plane essentially extending in x- and y-direction, which build material can be consolidated by means of an energy source, wherein the build material is carried by a carrying element of a carrying unit of the apparatus, wherein the carrying element is essentially movable in z-direction, wherein the z-direction is essentially perpendicular to the x- and y-direction, wherein a calibration unit is provided that is adapted to determine position data relating to an x- and/or y- position of the carrying element for at least one z-position. The calibration unit of the inventive apparatus may be separate to the apparatus, e.g. for determining at least one parameter of the calibration object, or integrated into the apparatus, in particular integrated into the powder module of the apparatus.

Of course, all details, features and advantages described with respect to the inventive method for determining position data for an apparatus for additively manufacturing of three-dimensional objects may be transferred to the inventive method for operating an additive manufacturing apparatus and to the inventive apparatus for additively manufacturing of three-dimensional objects. In particular, the additive manufacturing apparatus can be used to determine the position data, preferably using the calibration unit assigned to the apparatus. Based on the determined position data and/or the generated calibration data, an additive manufacturing process can be performed on the additive manufacturing apparatus using the inventive method for operating an additive manufacturing apparatus. As described before, various functional units may be used for performing the inventive method, such as the calibration unit, the (position) detection unit, a data storage and the like.

Exemplary embodiments of the invention are described with reference to the Fig. The Fig. are schematic diagrams, wherein
- Fig. 1: shows an inventive apparatus; and
- Fig. 2: shows a calibration unit for an inventive apparatus.

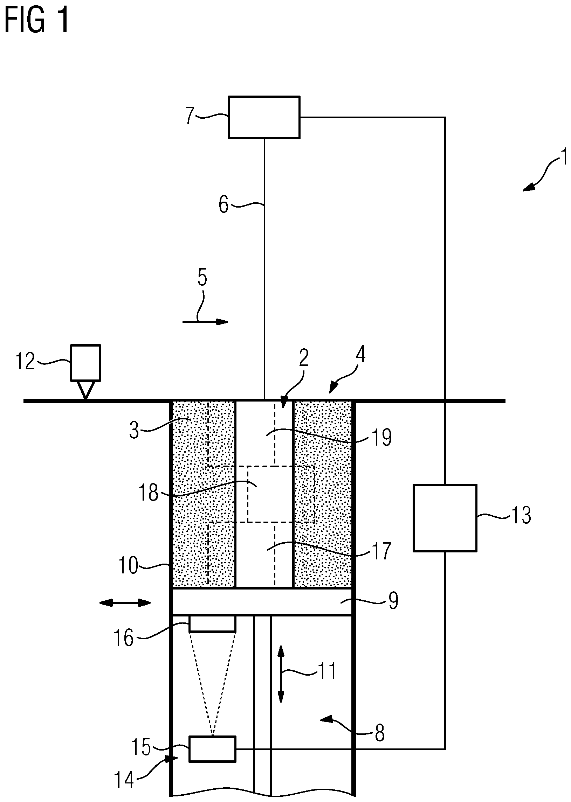

Fig. 1 shows an apparatus 1 for additively manufacturing of three-dimensional objects 2 by means of successive layerwise selective consolidation of layers of a build material 3 that is arranged in a build plane 4. The build plane 4 essentially extends in x- direction (indicated via arrow 5) and y-direction (essentially perpendicular to the drawing plane). The build material 3 that is arranged in the build plane 4 can be consolidated by means of an energy source, for example a laser beam 6. The laser beam 6 can be generated by an irradiation device 7 that is adapted to generate the laser beam 6 and guide the laser beam 6 over the build plane 4 to selectively irradiate the build material 3. In other words, an irradiation pattern can be generated via the irradiation device 7 that corresponds to a layer of the object 2 to be manufactured, as will be described below.

The apparatus 1 further comprises a carrying unit 8, for example a build module, comprising a carrying element 9, for example a build plate. As can be derived from Fig. 1, the carrying element 9 carries non-consolidated build material 3 and the object 2, wherein the object 2 is surrounded by the non-consolidated build material 3. Thus, the carrying element 9 carries a so-called "powder bed". The carrying element 9 is movable relative to a build chamber wall 10, as indicated via arrow 11. The carrying element 9 is therefore, movable in z-direction that essentially extends perpendicular to the build plane 4, and therefore, perpendicular to the x- direction and the y-direction. Hence, if a new layer of build material 3 has to be applied, the carrying element 9 can be lowered (indicated via arrow 11) and fresh build material 3 can be applied via an application unit 12, e.g a coater blade. Of course, the application of build material 3 via the application unit 12 is merely exemplary and any other arbitrary way of applying build material 3 is also feasible.

The apparatus 1 further comprises a calibration unit 13 with a determination unit 14 assigned to the calibration unit 13. The determination unit 14 is adapted to determine an x- and y-position of the carrying element 9, for example relative to the build chamber wall 10 or relative to the irradiation device 7. Of course, any arbitrary other reference point, such as a center of the build chamber or the build plane 4, can also be used. To determine the x- and y-position of the carrying element 9, the determination unit 14 comprises a detection element 15, wherein according to the example depicted in Fig. 1, the detection element 15 is built as optical detection element, in particular as CCD or CMOS sensor. The determination unit 14 further comprises a measurement structure 16 that is built as measurement pattern according to the embodiment depicted in Fig. 1. The measurement structure 16 is attached to a bottom side of the carrying element 9, i.e. the side that is not carrying (in contact with) the build material 3 or the powder bed, respectively. Thus, the bottom side refers to the side that opposes the side of the carrying element 9 that faces the build plane 4.

Via the detection of the position of the measurement structure 16 relative to a reference position, for example the position of the detection element 15, an x- and y-position of the carrying element 9 can be determined. In particular, it is possible to detect deviations from a nominal position of the carrying element 9, for example caused by deviations in guiding elements that guide the carrying element 9 relative to the build chamber walls 10. Such deviations may cause the carrying element 9 to deviate from a nominal position, for example the center of the carrying element 9 deviates from a nominal position. This can result in that dependent on the current z-position of the carrying element 9 the carrying element 9 deviates in the x- and/or y-direction. As the carrying element 9 may be arranged in different x- and/or y-positions with the carrying element 9 positioned in different z-positions, the irradiation pattern generated via the irradiation device 7 is differently positioned relative to the carrying element 9 for different z-positions of the carrying element 9. This leads to deviations in the additively built object 2, as the selective irradiation of different layers that are applied in different z-positions is performed in different x- and y-positions, e.g. in different positions in the x-y-plane relative to a reference position, such as the center of the build plane 4.

Exemplarily, three layers 17 - 19 are indicated via a dashed line, wherein the layers 17 - 19 deviate from a nominal position, e.g. the center of the build plane 4. If the object 2 would additively be built without a compensation of a deviation in x- and y-direction, the layers 17 - 19 would be misaligned or an offset would occur between the individual layers 17 - 19 (as indicated via the dashed contours). Of course, the deviations depicted in Fig. 1 are merely exemplary and exaggerated. Also, an arbitrary number of layers could be used to build the object 2.

The misalignment or the offset that is caused due to the deviations of the carrying element 9 in x- and y-direction are detected via the detection element 15 of the determination unit 14, as described above. Thus, the determined position data relating to the x- and y-position of the carrying element 9 can be provided to the calibration unit 13. The calibration unit 13 is adapted to generate calibration data, for example relating to a deviation of the carrying element 9. The respective position data and calibration data are determined / generated for each position of the carrying element in z-direction in which a layer of build material 3 is irradiated via the irradiation device 7.

Accordingly, the irradiation device 7 can be controlled based on the position data and/or the calibration data to compensate the misalignment and the deviation of the carrying element 9 from a nominal position, e.g. a center of the build plane 4. Hence, it is possible to "live monitor" occurring deviations in the position of the carrying element 9 and compensate the deviations via corresponding calibration data that are generated via the calibration unit 13. Thus, the irradiation device 7 is adapted to generate the irradiation pattern in the correct nominal position relative to the carrying element 9.

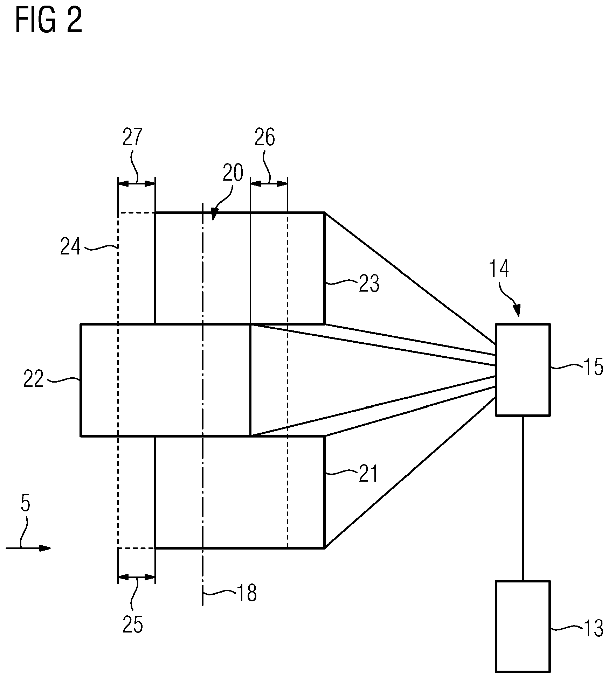

Fig. 2 shows a calibration unit 13 with a detection unit 15 that is adapted to determine position data of an additively built calibration object 20, e.g. built with the apparatus 1 using the carrying element 9. For the sake of simplicity, the calibration object 20 merely comprises three layers 21 - 23, wherein a dashed line 24 indicates the three-dimensional data based on which the additive manufacturing process of the calibration object 20 has been performed on. In other words, an additive manufacturing process has been performed to additively build the calibration object 20, e.g. with the apparatus 1 depicted in Fig. 1. As can be derived from Fig. 2, the calibration object 20 deviates from the three-dimensional data as indicated via the dashed line 24. Preferably, the calibration object 20 has been built using a defined, in particular the entire, movement range of the carrying element 9.

For example, layer 21 deviates from the three-dimensional data by a distance 25. Accordingly, the layer 22 deviates by distance 26 and the layer 23 deviates by distance 27. The deviations of the layers 21 - 23 from the three-dimensional data 24 based on which the additive manufacturing process has been performed, occur due to a misalignment and/or a deviation of the carrying element 9 from a nominal position, for example due to deviations in a guiding structure of the carrying element 9. The calibration unit 13 according to the exemplary embodiment depicted in Fig. 2, allows for determining position data from the additively built calibration object 20.

Thus, for the corresponding carrying element 9, position data can be determined that relate to the z-positions in which the carrying element 9 was positioned, when the respective layers 21, 22 and 23 where additively manufactured. Thus, the determined position data and the generated calibration data can be related to the corresponding z-position. For example, the position data relating to the position of the carrying element 9 in x- and y-direction can be determined for the layer 21, wherein the position data are related to the z-position of the carrying element 9 in which z-position the carrying element 9 was positioned when the layer 21 was built. The position data for the layers 22, 23 can be determined accordingly.

Thus, it is possible to use the determined position data and the generated calibration data in an additively manufacturing process, for example using the apparatus 1. Thereby, a deviation of the carrying element 9 in x- and/or y-direction for the z-position in which the carrying element 9 is currently positioned, can be compensated using the generated position data and/or a calibration data.

Thus, a calibration object 20 can be manufactured for the corresponding powder module comprising the carrying unit 8 with the carrying element 9 that is intended to be used in an additive manufacturing process in the apparatus 1, wherein the deviations of the single layers 21, 22 and 23 of the calibration object 20 can be detected and used to generate the calibration data. Thus, occurring deviations in the x-direction and the y-direction of the carrying element 9 can be related to the z-position of the carrying element 9, wherein in the actual manufacturing process of the three-dimensional object 2, the deviations of the carrying element 9 can be compensated by accordingly positioning the irradiation pattern generated via the irradiation device 7 relative to the carrying element 9.

To determine the position data corresponding to the layers 21 - 23, the determination unit 14 is adapted to determine the x- and y-position of each layer 21 - 23 relative to a reference point, for example a center 28 of the respective layer as defined by the three-dimensional data (indicated via line 24). Thus, the detection element 15 is adapted to determine a relative position of each layer 21, 22 and 23 relative to the center 28 of the calibration object 20 and therefore, detect whether the respective layers 21 - 23 deviate from their nominal positions. To detect the position of the layers 21 - 23, the detection unit 15 can, for example, be built as three-dimensional scanner or as laser interferometer.

Of course, the inventive method for determining position data for an apparatus for additively manufacturing of three-dimensional objects can be performed on the inventive apparatus 1. Although, only a deviation in the x- direction is depicted in the Fig. 1, 2, a deviation in the y-direction can also be determined and compensated accordingly. Hence, the respective position data can be determined and calibration data can be generated, as described before.

## Claims

1. Method for determining position data, generating calibration data, and controlling a position of an irradiation pattern of an irradiation device (7) of an apparatus (1) for additively manufacturing three-dimensional objects (2) by means of successive layerwise selective consolidation of layers (17 - 19, 21 - 23) of a build material (3) arranged in a build plane (4) essentially extending in x- and y-direction, which build material (3) can be consolidated by means of an energy source, wherein the build material (3) is carried by a carrying element (9) of a carrying unit (8), wherein the carrying element (9) is essentially movable in z-direction, wherein the z-direction is essentially perpendicular to the x- and y-direction, wherein position data relating to an x- and/or y-position of the carrying element (9) are determined for at least one z-position via an optical and/or a mechanical determination in advance of and/or during an additive manufacturing process, wherein the optical and/or a mechanical determination of the x- and/or y-position of the carrying element (9) is determined via a measurement structure (16) arranged on the bottom of the carrying element (9), wherein calibration data are generated relating to a deviation of the carrying element (9) from a nominal position in x- and/or y-direction for the at least one z-position, and wherein the position of the irradiation pattern of the irradiation device (7) for a corresponding layer relative to the carrying element (9) is controlled dependent on the calibration data and/or the position data.

2. Method according to claim 1, **characterized in that** the position data are determined for a plurality of z-positions , preferably distributed along a movement range, in particular an entire movement range, of the carrying element (9) in z-direction.

3. Method according to claim 1 or 2, **characterized in that** the position data and/or the calibration data are stored for the corresponding z-position, in particular for the corresponding carrying element (9).

4. Method according to any one of claims 1 to 3, **characterized in that** the position data relate to a determined, in particular measured, x- and/or y-position and/or an absolute x- and/or y-position of the carrying element (9) and/or a deviation thereof for at least one z-position.

5. Method according to any one of claims 1 to 4, **characterized in that** the position data relate to a distortion and/or an angular deviation of the carrying element (9) about a main axis of the carrying element (9), essentially arranged in z-direction.

6. Method according to any one of claims 1 to 5, **characterized in that** the following steps are performed:
- a calibration object (20) is manufactured extending over a defined part of the movement range, in particular the entire movement range, of the carrying element (9);
- at least one geometrical parameter of the calibration object (20) is determined;
- the at least one determined geometrical parameter is compared with at least one corresponding nominal geometrical parameter; and/or
- position data and/or calibration data are generated based on the comparison result.

7. Method according to claim 6, **characterized in that** the geometrical parameter is or comprises a position in x- and/or y-direction of the calibration object, in particular of a surface of the calibration object (20), for the corresponding z-position.

8. Method according to any one of claims 1 to 7, **characterized in that** the method is performed using at least one build module for use with the apparatus (1) for additively manufacturing three-dimensional objects (2).

9. Method according to any one of claims 1 to 8, **characterized in that** the position data and/or the calibration data are stored for a plurality of build modules for use with the apparatus (1) for additively manufacturing three-dimensional objects (2), and wherein the irradiation device (7) of the apparatus (1) is controlled dependent on the position data and/or calibration data corresponding to the respective one of the plurality of build modules being used with the apparatus (1).

10. Method for operating at least one apparatus (1) for additively manufacturing three-dimensional objects (2) by means of successive layerwise selective consolidation of layers (17 - 19, 21 - 23) of a build material (3) arranged in a build plane (4) essentially extending in x- and y-direction, which build material (3) can be consolidated by means of an energy source, wherein the build material (3) is carried by a carrying element (9) of a carrying unit (8), wherein the carrying element (9) is essentially movable in z-direction, wherein the z-direction is essentially perpendicular to the x- and y-direction, wherein position data relating to an x- and/or position of the carrying element (9) are determined for at least one z-position via an optical and/or a mechanical determination in advance to and/or during an additive manufacturing process, wherein the optical and/or a mechanical determination of the x- and/or y-position of the carrying element (9) is determined via a measurement structure (16) arranged on the bottom of the carrying element (9), wherein calibration data are generated relating to a deviation of the carrying element (9) from a nominal position in x- and/or y-direction for the at least one z-position, and wherein a position of an irradiation pattern of an irradiation device (7) for a corresponding layer relative to the carrying element (9) is controlled dependent on the calibration data and/or the position data.

11. Apparatus (1) for additively manufacturing three-dimensional objects (2) by means of successive layerwise selective consolidation of layers (17 - 19, 21 - 23) of a build material (3) arranged in a build plane (4) essentially extending in x- and y-direction, which build material (3) can be consolidated by means of an energy source, wherein the build material (3) is carried by a carrying element (9) of a carrying unit (8) of the apparatus (1), wherein the carrying element (9) is essentially movable in z-direction, wherein the z-direction is essentially perpendicular to the x- and y-direction, comprising a calibration unit (13) adapted to determine position data relating to an x-and/or y- position of the carrying element (9) for at least one z-position via an optical and/or a mechanical determination in advance to and/or during an additive manufacturing process, wherein the optical and/or a mechanical determination of the x- and/or y-position of the carrying element (9) is determined via a measurement structure (16) arranged on the bottom of the carrying element (9), wherein the calibration unit (13) is adapted to generate calibration data relating to a deviation of the carrying element (9) from a nominal position in x- and/or y-direction for the at least one z-position, and wherein a position of an irradiation pattern of an irradiation device (7) for a corresponding layer relative to the carrying element (9) is controlled dependent on the calibration data and/or the position data.

## Patentansprüche

1. Verfahren zum Bestimmen von Positionsdaten, Erzeugen von Kalibrierungsdaten und Steuern einer Position eines Bestrahlungsmusters einer Bestrahlungsvorrichtung (7) einer Vorrichtung (1) zur additiven Herstellung dreidimensionaler Objekte (2) mittels aufeinanderfolgender, schichtweiser selektiver Verfestigung von Schichten (17-19, 21-23) eines Aufbaumaterials (3), das in einer Aufbauebene (4) angeordnet ist, die sich im Wesentlichen in X- und Y-Richtung erstreckt, welches Aufbaumaterial (3) mittels einer Energiequelle verfestigt werden kann, wobei das Aufbaumaterial (3) von einem Trägerelement (9) einer Trägereinheit (8) getragen wird, wobei das Trägerelement (9) im Wesentlichen in Z-Richtung bewegbar ist, wobei die Z-Richtung im Wesentlichen senkrecht zur X- und Y-Richtung ist, wobei Positionsdaten, die sich auf eine X- und/oder Y-Position des Trägerelements (9) beziehen, für mindestens eine Z-Position über eine optische und/oder eine mechanische Bestimmung vor und/oder während eines Prozesses zur additiven Herstellung bestimmt werden, wobei die optische und/oder eine mechanische Bestimmung der X- und/oder Y-Position des Trägerelements (9) über eine Messstruktur (16) bestimmt wird, die an der Unterseite des Trägerelements (9) angeordnet ist, wobei Kalibrierungsdaten, die sich auf eine Abweichung des Trägerelements (9) von einer Sollposition in X- und/oder Y-Richtung beziehen, für die mindestens eine Z-Position erzeugt werden, und wobei die Position des Bestrahlungsmusters der Bestrahlungsvorrichtung (7) für eine entsprechende Schicht in Bezug auf das Trägerelement (9) abhängig von den Kalibrierungsdaten und/oder den Positionsdaten gesteuert wird.

2. Verfahren nach Anspruch 1, **dadurch gekennzeichnet, dass** die Positionsdaten für eine Vielzahl von Z-Positionen, bevorzugt verteilt entlang eines Bewegungsbereichs, insbesondere eines gesamten Bewegungsbereichs, des Trägerelements (9) in Z-Richtung bestimmt werden.

3. Verfahren nach Anspruch 1 oder 2, **dadurch gekennzeichnet, dass** die Positionsdaten und/oder die Kalibrierungsdaten für die entsprechende Z-Position, insbesondere für das entsprechende Trägerelement (9) gespeichert werden.

4. Verfahren nach einem der Ansprüche 1 bis 3, **dadurch gekennzeichnet, dass** sich die Positionsdaten auf eine bestimmte, insbesondere gemessene X- und/oder Y-Position und/oder eine absolute X- und/oder Y-Position des Trägerelements (9) und/oder eine Abweichung desselben für zumindest eine Z-Position beziehen.

5. Verfahren nach einem der Ansprüche 1 bis 4, **dadurch gekennzeichnet, dass** sich die Positionsdaten auf eine Verzerrung und/oder eine Winkelabweichung des Trägerelements (9) um eine Hauptachse des Trägerelements (9), im Wesentlichen in Z-Richtung angeordnet, beziehen.

6. Verfahren nach einem der Ansprüche 1 bis 5, **dadurch gekennzeichnet, dass** die folgenden Schritte durchgeführt werden:
- ein Kalibrierungsobjekt (20) wird hergestellt, das sich über einen definierten Teil des Bewegungsbereichs, insbesondere den gesamten Bewegungsbereich, des Trägerelements (9) erstreckt;
- mindestens ein geometrischer Parameter des Kalibrierungsobjekts (20) wird bestimmt;
- der mindestens eine bestimmte geometrische Parameter wird mit mindestens einem entsprechenden geometrischen Nennparameter verglichen; und/oder
- Positionsdaten und/oder Kalibrierungsdaten werden auf Grundlage des Vergleichsergebnisses erzeugt.

7. Verfahren nach Anspruch 6, **dadurch gekennzeichnet, dass** der geometrische Parameter eine Position in X- und/oder Y-Richtung des Kalibrierungsobjekts ist oder aufweist, insbesondere einer Oberfläche des Kalibrierungsobjekts (20) für die entsprechende Z-Position.

8. Verfahren nach einem der Ansprüche 1 bis 7, **dadurch gekennzeichnet, dass** das Verfahren unter Verwendung von mindestens einem Aufbaumodul zur Verwendung mit der Vorrichtung (1) zur additiven Herstellung dreidimensionaler Objekte (2) durchgeführt wird.

9. Verfahren nach einem der Ansprüche 1 bis 8, **dadurch gekennzeichnet, dass** die Positionsdaten und/oder die Kalibrierungsdaten für eine Vielzahl von Aufbaumodulen zur Verwendung mit der Vorrichtung (1) zur additiven Herstellung dreidimensionaler Objekte (2) gespeichert werden, und wobei die Bestrahlungsvorrichtung (7) der Vorrichtung (1) abhängig von den Positionsdaten und/oder Kalibrierungsdaten, die der jeweiligen der Vielzahl von Aufbaumodulen entsprechen, die mit der Vorrichtung (1) verwendet werden, gesteuert wird.

10. Verfahren zum Betrieb von mindestens einer Vorrichtung (1) zur additiven Herstellung dreidimensionaler Objekte (2) mittels aufeinanderfolger, schichtweiser selektiver Verfestigung von Schichten (17-19, 21-23) eines in einer Aufbauebene (4), die sich im Wesentlichen in X- und Y-Richtung erstreckt, angeordneten Aufbaumaterials (3), welches Aufbaumaterial (3) mittels einer Energiequelle verfestigt werden kann, wobei das Aufbaumaterial (3) von einem Trägerelement (9) einer Trägereinheit (8) getragen wird, wobei das Trägerelement (9) im Wesentlichen in Z-Richtung bewegbar ist, wobei die Z-Richtung im Wesentlichen senkrecht zur X- und Y-Richtung ist, wobei Positionsdaten, die sich auf eine X- und/oder eine Y-Position des Trägerelements (9) beziehen, für mindestens eine Z-Position über eine optische und/oder eine mechanische Bestimmung vorab und/oder während eines additiven Herstellungsprozesses bestimmt werden, wobei die optische und/oder eine mechanische Bestimmung der X- und/oder Y-Position des Trägerelements (9) über eine Messstruktur (16) bestimmt wird, die an der Unterseite des Trägerelements (9) angeordnet ist, wobei Kalibrierungsdaten, die sich auf eine Abweichung des Trägerelements (9) von einer Sollposition in X- und/oder Y-Richtung beziehen, für die mindestens eine Z-Position erzeugt werden, und wobei eine Position eines Bestrahlungsmusters einer Bestrahlungsvorrichtung (7) für eine entsprechende Schicht in Bezug auf das Trägerelement (9) abhängig von den Kalibrierungsdaten und/oder den Positionsdaten gesteuert wird.

11. Vorrichtung (1) zur additiven Herstellung dreidimensionaler Objekte (2) mittels aufeinanderfolgender, schichtweiser selektiver Verfestigung von Schichten (17-19, 21-23) eines in einer Aufbauebene (4), die sich im Wesentlichen in X- und Y-Richtung erstreckt, angeordneten Aufbaumaterials (3), welches Aufbaumaterial (3) mittels einer Energiequelle verfestigt werden kann, wobei das Aufbaumaterial (3) von einem Trägerelement (9) einer Trägereinheit (8) der Vorrichtung (1) getragen wird, wobei das Trägerelement (9) im Wesentlichen in Z-Richtung bewegbar ist, wobei die Z-Richtung im Wesentlichen senkrecht zur X- und Y-Richtung ist, aufweisend eine Kalibrierungseinheit (13), die eingerichtet ist, Positionsdaten, die sich auf eine X- und/oder Y-Position des Trägerelements (9) beziehen, für zumindest eine Z-Position über eine optische und/oder eine mechanische Bestimmung vorab und/oder während eines Prozesses zur additiven Herstellung zu bestimmen, wobei die optische und/oder eine mechanische Bestimmung der X- und/oder Y-Position des Trägerelements (9) über eine Messstruktur (16) bestimmt wird, die an der Unterseite des Trägerelements (9) angeordnet ist, wobei die Kalibrierungseinheit (13) eingerichtet ist, Kalibrierungsdaten zu erzeugen, die sich auf eine Abweichung des Trägerelements (9) von einer Sollposition in X- und/oder Y-Richtung für die mindestens eine Z-Position beziehen, und wobei eine Position eines Bestrahlungsmusters einer Bestrahlungsvorrichtung (7) für eine entsprechende Schicht in Bezug auf das Trägerelement (9) abhängig von den Kalibrierungsdaten und/oder den Positionsdaten gesteuert wird.

## Revendications

1. Procédé de détermination de données de position, de production de données d'étalonnage et de commande d'une position d'un profil d'irradiation d'un dispositif d'irradiation (7) d'un appareil (1) permettant la fabrication additive d'objets tridimensionnels (2) au moyen de la consolidation sélective, en forme de couches successives, de couches (17 - 19, 21 - 23) d'un matériau de construction (3) disposé dans un plan de construction (4) s'étendant sensiblement dans les directions x et y, ledit matériau de construction (3) pouvant être consolidé au moyen d'une source d'énergie,
dans lequel le matériau de construction (3) est transporté par un élément porteur (9) d'une unité de transport (8), dans lequel l'élément porteur (9) peut se déplacer sensiblement dans la direction z, dans lequel la direction z est sensiblement perpendiculaire aux directions x et y, dans lequel les données de position se rapportant à une position x et/ou y de l'élément porteur (9) sont déterminées pour au moins une position z par l'intermédiaire d'une détermination optique et/ou mécanique avant et/ou pendant un traitement de fabrication additive, dans lequel la détermination optique et/ou mécanique de la position x et/ou y de l'élément porteur (9) est effectuée par l'intermédiaire d'une structure de mesure (16) disposée sur la partie inférieure de l'élément porteur (9), dans lequel les données d'étalonnage sont produites par rapport à un écart de l'élément porteur (9) à partir d'une position nominale dans la direction x et/ou y pour la ou les positions z, et dans lequel la position du profil d'irradiation du dispositif d'irradiation (7), pour une couche correspondante se rapportant à l'élément porteur (9), est commandée en fonction des données d'étalonnage et/ou des données de position.

2. Procédé selon la revendication 1, **caractérisé en ce que** les données de position sont déterminées pour une pluralité de positions z, distribuées de préférence le long d'une plage de déplacement, en particulier une plage de déplacement entière, de l'élément porteur (9) dans la direction z.

3. Procédé selon les revendications 1 ou 2, **caractérisé en ce que** les données de position et/ou les données d'étalonnage sont stockées pour la position z correspondante, en particulier pour l'élément porteur (9) correspondant.

4. Procédé selon l'une quelconque des revendications 1 à 3, **caractérisé en ce que** les données de position se rapportent à une position x et/ou y déterminée, en particulier mesurée, et/ou à une position x et/ou y absolue de l'élément porteur (9) et/ou à un écart de ce dernier pour au moins une position z.

5. Procédé selon l'une quelconque des revendications 1 à 4, **caractérisé en ce que** les données de position se rapportent à une distorsion et/ou à un écart angulaire de l'élément porteur (9) autour d'un axe principal de l'élément porteur (9), disposé sensiblement dans la direction z.

6. Procédé selon l'une quelconque des revendications 1 à 5, **caractérisé en ce que** les étapes suivantes son effectuées :
- un objet d'étalonnage (20) est fabriqué, s'étendant sur une partie définie de la plage de déplacement, en particulier sur la plage de déplacement entière, de l'élément porteur (9) ;
- au moins un paramètre géométrique de l'objet d'étalonnage (20) est déterminé ;
- le ou les paramètres géométriques déterminés sont comparés avec au moins un paramètre géométrique nominal correspondant ; et/ou
- des données de position et/ou des données d'étalonnage sont produites en fonction du résultat de la comparaison.

7. Procédé selon la revendication 6, **caractérisé en ce que** le paramètre géométrique est ou comprend une position dans les directions x et/ou y de l'objet d'étalonnage, en particulier d'une surface de l'objet d'étalonnage (20), pour la position z correspondante.

8. Procédé selon l'une quelconque des revendications 1 à 7, **caractérisé en ce que** le procédé est effectué à l'aide d'au moins un module de construction destiné à être utilisé avec l'appareil (1) permettant la fabrication additive d'objets tridimensionnels (2).

9. Procédé selon l'une quelconque des revendications 1 à 8, **caractérisé en ce que** les données de position et/ou les données d'étalonnage sont stockées pour une pluralité de modules de construction destinés à être utilisés avec l'appareil (1) permettant la fabrication additive d'objets tridimensionnels (2), et dans lequel le dispositif d'irradiation (7) de l'appareil (1) est commandé en fonction des données de position et/ou des données d'étalonnage correspondant au module respectif parmi la pluralité de modules de construction en cours d'utilisation avec l'appareil (1).

10. Procédé destiné à faire fonctionner au moins un appareil (1) permettant la fabrication additive d'objets tridimensionnels (2) au moyen de la consolidation sélective, en forme de couches successives, de couches (17 - 19, 21 - 23) d'un matériau de construction (3) disposé dans un plan de construction (4) s'étendant sensiblement dans les directions x et y, ledit matériau de construction (3) pouvant être consolidé au moyen d'une source d'énergie,
dans lequel le matériau de construction (3) est transporté par un élément porteur (9) d'une unité de transport (8), dans lequel l'élément porteur (9) peut se déplacer sensiblement dans la direction z, dans lequel la direction z est sensiblement perpendiculaire aux directions x et y, dans lequel des données de position se rapportant à une position x et/ou y de l'élément porteur (9) sont déterminées pour au moins une position z par l'intermédiaire d'une détermination optique et/ou mécanique avant et/ou pendant un traitement de fabrication additive, dans lequel la détermination optique et/ou mécanique de la position x et/ou y de l'élément porteur (9) est effectuée par l'intermédiaire d'une structure de mesure (16) disposée sur la partie inférieure de l'élément porteur (9), dans lequel des données d'étalonnage sont produites par rapport à un écart de l'élément porteur (9) à partir d'une position nominale dans la direction x et/ou y pour la ou les positions z, et dans lequel une position du profil d'irradiation d'un dispositif d'irradiation (7), pour une couche correspondante se rapportant à l'élément porteur (9), est commandée en fonction des données d'étalonnage et/ou des données de position.

11. Appareil (1) permettant la fabrication additive d'objets tridimensionnels (2) au moyen de la consolidation sélective, en forme de couches successives, de couches (17 - 19, 21 - 23) d'un matériau de construction (3) disposé dans un plan de construction (4) s'étendant sensiblement dans les directions x et y, ledit matériau de construction (3) pouvant être consolidé au moyen d'une source d'énergie,
dans lequel le matériau de construction (3) est transporté par un élément porteur (9) d'une unité de transport (8) de l'appareil (1), dans lequel l'élément porteur (9) peut se déplacer sensiblement dans la direction z, dans lequel la direction z est sensiblement perpendiculaire aux directions x et y,
comprenant une unité d'étalonnage (13) adaptée à déterminer des données de position se rapportant à une position x et/ou y de l'élément porteur (9) pour au moins une position z, par l'intermédiaire d'une détermination optique et/ou mécanique avant et/ou pendant un traitement de fabrication additive,
dans lequel la détermination optique et/ou mécanique de la position x et/ou y de l'élément porteur (9) est effectuée par l'intermédiaire d'une structure de mesure (16) disposée sur la partie inférieure de l'élément porteur (9), dans lequel l'unité d'étalonnage (13) est adaptée à produire des données d'étalonnage par rapport à un écart de l'élément porteur (9) à partir d'une position nominale dans la direction x et/ou y pour la ou les positions z, et dans lequel une position d'un profil d'irradiation d'un dispositif d'irradiation (7), pour une couche correspondante se rapportant à l'élément porteur (9), est commandée en fonction des données d'étalonnage et/ou des données de position.
